# EUROPÄISCHE PATENTSCHRIFT

(11) **EP 1 757 902 B1**
(45) Veröffentlichungstag und Bekanntmachung des Hinweises auf die Patenterteilung: **28.11.2007**
(21) Anmeldenummer: 05022072.2
(22) Anmeldetag: 11.10.2005
(51) Int. Cl.: G01B 11/25

(54) **Verfahren und Vorrichtung zur Formerfassung eines zahntechnischen Objektes**
Method and apparatus for measuring the shape of a dental object
Procédé et dispositif pour mesurer la forme d'un objet dentaire

(30) Priorität: 24.08.2005 DE 102005040282
(43) Veröffentlichungstag der Anmeldung: 28.02.2007
(73) Patentinhaber: DeguDent GmbH, 63457 Hanau-Wolfgang (DE)
(72) Erfinder: Brinkmann, Hartmut, 49163 Bohmte (DE); Fecher, Stefan, 63867 Johannesberg (DE); Völkl, Lothar, 63773 Goldbach (DE)
(74) Vertreter: Stoffregen, Hans-Herbert

(56) Entgegenhaltungen:
- EP-A- 1 477 765
- DE-A1- 4 301 538

## Beschreibung

Die Erfindung bezieht sich auf ein Verfahren zur berührungslosen dreidimensionalen Formerfassung eines zahntechnischen Objektes, wie Positivmodells oder eines Abschnitt dieses, wobei zur Ermittlung der Raumkoordinaten zu messender Oberflächenpunkte des Objektes ein auf das Objekt projizierter Lichtstreifen mit zumindest zwei Matrix-Kameras zur Bestimmung von zwei Ortskoordinaten (Z-, Y-Koordinate) eines Koordinatensystems gemessen wird und durch Erfassen der Position des auf einem um eine Drehachse drehbaren Messtisches angeordneten Objekts die dritte Raumkoordinate (X-Koordinate) bestimmt wird. Ferner nimmt die Erfindung Bezug auf eine Anordnung zur berührungslosen dreidimensionalen Formerfassung eines zahntechnischen Objekts, wie Positivmodells oder Abschnitt dieses, mit einem das zahntechnische Objekt aufnehmenden und um eine Drehachse drehbaren Messtisch, einer Lichterzeugungseinrichtung wie Lasereinrichtung zum Abbilden einer Lichtlinie auf das zahntechnische Objekt, zwei auf die Lichtlinie ausgerichtete Matrix-Kameras sowie einer Signale der Matrix-Kameras zur Bestimmung der Koordinate der Lichtlinie auswertenden Auswerteeinheit.

Ein Verfahren der eingangs genannten Art ist der DE-A-43 01 538 zu entnehmen. Dabei wird nach einem Ausführungsbeispiel bei einem auf einem Drehtisch angeordneten zahntechnischen Objekt mittels zwei einen spitzen Winkel einschließenden CCD-Matrix-Kameras der Höhenwert (Z-Achse) nach dem Triangulationsprinzip bestimmt. Der Wert der senkrecht zu der Z-Achse verlaufenden Y-Koordinate wird durch das auf das zahntechnische Objekt projizierte Streifenlicht gewonnen. Die dritte Raumkoordinate (X-Koordinate) wird von dem Drehtisch geliefert. Um das Streifenlicht zu erzeugen, werden ein Diodenlaser, eine Koordinatenoptik und eine Zylinderlinsenanordnung verwendet. Hierzu werden Stellsignale abgegriffen.

Messungen haben gezeigt, dass die zur Herstellung eines auf das zahntechnische Objekt bzw. einen Abschnitt dieses aufzusetzenden bzw. einzusetzenden Zahnersatzes erforderlichen Daten nicht hinreichend genau sind und nicht in der erforderlichen Schnelligkeit ermittelt werden. Ursächlich hierfür ist unter anderem die nicht hinreichend genaue bzw. mit erheblichem Aufwand verbundene Bestimmung der durch die Position des Drehtisches vorgegebenen Raumkoordinate.

Der DE-A-101 33 568 ist ein Verfahren zur dreidimensionalen Messung eines zahntechnischen Objektes zu entnehmen. Hierzu wird das Objekt in eine Halterung in einer definierten Orientierung eingespannt, bestrahlt und die reflektierte Strahlung ausgewertet, wobei das Objekt sowohl translatorisch als auch rotatorisch zu einer Strahlenquelle bewegt wird, um die Messung durchzuführen.

Der vorliegenden Erfindung liegt die Aufgabe zugrunde, ein Verfahren und eine Anordnung der eingangs genannten Art so weiterzubilden, dass auf einfachem Wege eine berührungslose Formerfassung des zahntechnischen Objektes möglich wird, wobei der konstruktive Aufwand zur Bestimmung der Raumkoordinaten gering gehalten werden und die Formermittlung dennoch überaus präzise und mit hoher Geschwindigkeit erfolgen soll.

Zur Lösung der Aufgabe sieht die Erfindung im Wesentlichen vor, dass die Matrix-Kamera eine Farb-Matrix-Kamera mit ersten, zweiten und dritten Pixeln ist, dass von der Matrix-Kamera Licht in einem im Wesentlichen für eine Art der Pixel (erste Pixel) charakteristischen Wellenlängenbereich aufgenommen und Werte zumindest einer der anderen Arten der Pixel (zweite und dritte Pixel) zur Bestimmung der zwei ersten Ortskoordinaten (Y- und Z-Koordinaten) ausgewertet werden.

Insbesondere ist vorgesehen, dass die Matrix-Kamera mit Licht mit für die roten Pixel als die ersten Pixel charakteristischen Strahlung vorzugsweise im Wellenlängenbereich von etwa 635 nm beaufschlagt wird. Dabei sollte die Matrix-Kamera mit einer Beleuchtungsstärke beaufschlagt werden, die zu einer Übersteuerung, d. h. Überbelichtung führt. Durch diese Maßnahmen werden nicht nur die Pixel angeregt, die für die auftreffende Strahlung besonders empfmdlich sind (die ersten Pixel), sondern auch die weiteren Pixel, d. h. bei einem auf die roten Pixel ausgelegten Wellenlängenbereich der beaufschlagenden Strahlung die grünen und blauen Pixel, um sodann diese Pixel - bevorzugterweise die grün angeregten Pixel - auszuwerten. Hierdurch erhält man eine positionsgenaue Erfassung der auf das zahntechnische Objekt auffallenden Linie wie Laserlinie und somit eine hohe Auflösung. Zusätzlich können Filter vorgesehen sein, um intrinsisches Störlicht im Laserlicht zu eliminieren.

Das zahntechnische Objekt wird sodann auf dem Mess- bzw. Drehtisch um die Drehachse gedreht, wobei Schrittwinkel von 1° bevorzugt werden. Andere Winkel sind gleichfalls möglich. Nach den Aufnahmen der einzelnen Lichtschnitte werden die entsprechenden Bilder auf die Drehachse transformiert, um sodann die transformierten Bilder zu dem abzubildenden Objekt in digitaler Form zusammenzusetzen.

Die Schrittwinkel können auch dadurch realisiert werden, dass bei konstanter Umdrehungsgeschwindigkeit mit einer festen Bildfolgefrequenz das Objekt aufgenommen wird. Diese Maßnahme ist äquivalent zu der Drehung des Messtisches um bestimmte Schrittwinkel.

Zur Durchführung der Transformation wird zuvor ein Stab oder Stift bekannter Abmessungen in den einzelnen Winkelstellungen aufgenommen, wobei die Drehachse mit der Längsachse des Stifts oder Stabs zusammenfallt.

Mit anderen Worten werden die Bilder des Stiftes bzw. Stabes zur Transformation der Messergebnisse der einzelnen Lichtschnitte des zahntechnischen Objekts auf die Drehachse benutzt.

Die Koordinaten der Lichtschnitte werden unter Zugrundelegung einer zuvor erfolgten Kalibrierung ermittelt, die nachstehend noch erläutert wird.

Nach einem eigenerfinderischen Vorschlag ist vorgesehen, dass die zwei Matrixkameras, bei denen es sich bevorzugterweise um CMOS-Matrix-Kameras handelt, symmetrisch zu einer Ebene ausgerichtet werden, in der die Drehachse des Messtisches liegt, wobei die Kameras zusätzlich derart zu einem flächigen in der Ebene angeordneten und mittig von der Ebene durchsetzenden Kalibrierkörper ausgerichtet werden, dass die Kamerabilder identisch sind.

Nach einem weiteren eigenerfinderischen Vorschlag wird der Scheimpflugwinkel der Chipflächen, d. h. der Winkel der Matrizen der Kameras zur optischen Achse so eingestellt, dass die Flächen des Kalibrierkörpers scharf abgebildet werden.

Durch die Schrägstellung der Matrizen werden allerdings verzerrte Bilder aufgenommen. Das Entzerren erfolgt sodann mittels geeigneter Software. Befinden sich z. B. auf der abzubildenden Seite des Kalibrierkörpers Kreise, so werden auf den Chipflächen deformierte Kreise abgebildet, die mittels der Software in Kreise umgerechnet werden, um diesen Abbildungsfehler zu kompensieren. Jedem Pixel ist sodann auf diese Weise eine eindeutige Koordinate zugeordnet. Die so gewonnenen Kalibrierdaten liegen sodann der Auswertung der Lichtschnitte zugrunde.

Zum Kalibrieren der Lichtlinie (z. B. Laserlinie) kann gleichfalls der eigensteife flächige Kalibrierkörper benutzt werden, wobei die Laserlinie parallel zur Platte und mittig auf dem der Kamera zugewandten Rand des Kalibrierkörpers auffällt. Die Laserlinie selbst sollte derart aufgefächert sein, dass die Randstrahlen einen Winkel von zwischen 10° und 30°, vorzugsweise 20° einschließen. Mit anderen Worten durchsetzt die Linie die Drehachse des Dreh- bzw. Messtisches, die außerdem in der von dem aufgefächerten Messstrahl aufgespannten Ebene liegt.

Ist auf diese Weise der aus den Kameras (vorzugsweise CMOS-Matrix-Kameras) und der Linienstrahlquelle bestehende Messkopf kalibriert, kann dieser eingebaut werden.

Durch die zuvor erläuterten Maßnahmen erfolgt insgesamt ein Entzerren der Kamerabilder sowie ein Justieren der Linie zur Drehachse. Sodann wird im Lichtschnittverfahren gearbeitet, wobei der zu messende Bereich des zahntechnischen Objekts von der Drehachse des Messtisches zu durchsetzen ist.

Soll nicht nur ein räumlich begrenzter Bereich eines zahntechnischen Objektes wie ein Stumpf, sondern ein größerer Bereich gemessen werden, so ist es erforderlich, dass das zahntechnische Objekt mehrfach auf dem Drehtisch umgesetzt wird, um den zu messenden Teilbereich von der Drehachse des Messtisches durchsetzen zu lassen. Um die einzelnen Messungen in Abhängigkeit von der Position des zahntechnischen Objektes, also die in der jeweiligen Stellung gemessenen Punktwolken miteinander verknüpfen zu können, muss die Beziehung zwischen der jeweiligen Position des Objekts und Drehachse bekannt sein.

Daher sieht ein weiterer cigenertinderischer Vorschlag der Erfindung vor, dass oberhalb des Messtisches eine weitere Kamera (Referenzierungskamera) angeordnet wird, deren optische Achse entlang Drehachse des Messtisches ausgerichtet wird und dass der Messtisch oder eine das Objekt aufnehmende und auf dem Messtisch angeordnete Halterung mit einer Referenzierung versehen wird, mittels der Bilder des auf dem Messtisch in voneinander abweichenden Positionen angeordneten zahntechnischen Objekts korreliert, also positionsgenau zusammengesetzt werden.

Diese Kamera kann auch zur Ausrichtung des zahntechnischen Objektes bzw. des zu vermessenden Objektabschnitts auf die Drehachse benutzt werden, wenn in das von der Kamera aufgenommene Bild eine Markierung der Drehachse eingeblendet wird. Die Markierung kann vorzugsweise die Form eines Kreuzes aufweisen.

Um eine hinreichende Ausleuchtung des zahntechnischen Objektes zu ermöglichen, ist vorgesehen, dass das Objektiv der Referenzierungskamera von einem Leuchtring - vorzugsweise aus Leuchtdioden bestehend - umgeben ist, über den das Objekt im erforderlichen Umfang beleuchtet wird.

Die Referenzierung und die Referenzierungskamera werden folglich benutzt, um auf einfache Weise die Relativposition des zahntechnischen Objektes zu der Drehachse des Messtisches und damit zu den Matrix-Kameras zu bestimmen und infolgedessen auch die Raumkoordinate des jeweils erfassten Messpunktes. Hierzu wird die Referenzierung benutzt, die sich an dem Element befindet, von dem unmittelbar das zu messende zahntechnische Objekt ausgeht, vorzugsweise an der auf dem Drehtisch befestigbaren Halterung. Beim Drehen des Drehtisches bewegt sich die Referenzierung kreisförmig um den Mittelpunkt der Drehachse. Durch Detektion der relativen Verschiebungen und Verdrehungen der Referenzierung zur Referenzicrungskamera ist eine hochpräzise Ortsbestimmung der jeweiligen Position des zahntechnischen Objekts möglich, so dass anschließend auf einfache Weise die Messwerte, also die Punktwolken zu optischen Darstellungen des zahntechnischen Objektes verknüpft werden können.

Aus der Position der Winkelstellung des Drehtisches, der von der Referenzierungskamera erfassten Referenzierung sowie der Positionen der Matrix-Kameras in Bezug auf die Drehachse können sodann die Raumkoordinaten eines jeden Messpunktes bestimmt werden.

Die Halterung selbst ist insbesondere dreh-, kipp- und vorzugsweise auch höhenverstellbar und in der gewählten Ausrichtung zu der Referenzierungskamera arretierbar, wobei eine Positionierung derart erfolgt, dass zu messender mit einem Zahnersatz zu versehender Abschnitt des Objektes von der Drehachse durchsetzt wird.

Insbesondere ist vorgesehen, dass das zu messende mit einem Zahnersatz zu versehende zahntechnische Objekt derart zu der Drehachse ausgerichtet wird, dass Einschub bzw. Abzugsrichtung des herzustellenden Zahnersatzes parallel oder in etwa parallel zur Drehachse und damit zur optischen Achse der Referenzierungskamera verläuft.

Besonders gute Messergebnisse mit einer hohen Auflösung, also präziser Messung der Koordinaten der Messlinie wie Laserlinie ergeben sich dann, wenn das zahntechnische Objekt mit einem Licht bestrahlt bzw. von den Matrixkameras Licht in einem Wellenlängenbereich erfasst wird, das die roten Pixel anregt. Dabei wird die Bestrahlungsstärke so ausgelegt, dass bezüglich der roten Pixel zwar eine Übersteuerung, d. h. LUberbelichtung erfolgt, dadurch aber auch die weiteren Pixel angeregt und von diesen bevorzugterweise die grünen Pixel zur Bestimmung der Koordinaten der Messlinie ausgewertet werden.

Eine Anordnung der eingangs genannten Art zeichnet sich dadurch aus, dass die Matrix-Kameras Farb-Matrix-Kameras sind, wobei die Matrix-Kameras mit Licht in einem Wellenlängenbereich beaufschlagt sind, das charakteristisch für eine erste Art der Pixel ist, und dass die Ladungswerte einer von der ersten Art der Pixel verschiedenen zweiten Art von Pixeln zur Vermessung der Lichtlinie auswertbar sind.

Unabhängig hiervon wird durch die Verwendung von zwei Matrix-Kameras die Möglichkeit eröffnet, Abschnitte zu erfassen, bei denen die reflektierte Laserlinie für eine der Kameras nicht sichtbar ist. Eine erhöhte Messgenauigkeit ergibt sich in den Abschnitten, die gleichzeitig von den beiden Matrix-Kameras beobachtet werden.

In hervorzuhebender Weiterbildung der Erfindung ist vorgesehen, dass oberhalb des Messtisches eine Referenzierungskamera zur Erfassung einer auf dem Messtisch oder einer auf diesem angeordneten Halterung vorhandenen Referenzierung angeordnet ist. Dabei ist insbesondere das zahntechnische Objekt auf der Halterung angeordnet, um auf einfache Weise zu der Drehachse des Messtisches versetzt zu werden. Dabei kann die Halterung dreh-, kipp- und höhenverstellbar ausgebildet sein.

Bei den Matrix-Kameras handelt es sich insbesondere um CMOS-Farb-Matrix-Kameras, wobei vorzugsweise die Signale ausgewertet werden, die von grünen Pixeln stammen.

Die optischen Achsen der zwei Matrix-Kameras verlaufen unter einem Winkel γ von 60° bis 90° insbesondere unter einem Winkel γ von 80° zueinander, wobei die optische Achse einer jeden Matrix-Kamera zur Vertikalen einen Winkel α₁, α₂ mit 30° ≤ α₁, α₂ ≤ 60° einschließen sollte, wobei insbesondere α₁ = α₂.

Bezüglich des Lichtstreifens, d.h. der auf das Objekt projizierten Lichtlinie wie Laserlinie sollte die hierzu verwendete Einheit zumindest einen Laser wie Diodenlaser und eine Optik umfassen. Der aufgefächerte Strahl sollte einen Winkel β mit 10° ≤ β ≤ 30° einschließen.

Dabei verläuft der Mittelstrahl der Lichtlinie insbesondere entlang der Winkelhalbierenden der optischen Achsen der CMOS-Kameras, also in der Ebene, die von den optischen Achsen aufgespannt wird. Zur Vertikalen beschreibt der Mittelstrahl den Winkel δ, der gleich α₁ bzw. α₂ ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

### Es zeigen:

- Fig. 1: eine Prinzipdarstellung einer Messanordnung in Vorderansicht und
- Fig. 2: die Messanordnung nach Fig. 1, jedoch um 90° gedreht (Seitenansicht).

In den Figuren ist eine Prinzipdarstellung einer Anordnung zur berührungslosen Fonnerfassung eines zahntechnischen Objektes - im Ausführungsbeispiel in Form eines Positivmodells 10 - dargestellt. Das Positivmodell 10 ist auf einer Halterung 12 angeordnet, die entsprechend der Pfeile 14 und 16 zu einem Mess- oder Drehtisch 18 verstell- und kippbar und höhenverstellbar ist. Der Drehtisch 18 selbst ist um eine Achse 20 drehbar (Pfeil 22). Oberhalb des Drehtisches 18 ist eine Referenzierungskamera 24 angeordnet, über die der Drehtisch 18 bzw. der Bereich erfassbar ist, in dem das Positivmodell 10 mit der Halterung 12 auf dem Drehtisch 18 in gewünschter Position und Ausrichtung befestigt wird.

Von der Halterung 12 gehen des Weiteren eine Referenzierung bildende Markierungen 26, 28 aus, über die die Position der Halterung 12 und damit des Positiv- oder Gipsmodells 10 zur Drehachse 20 erfassbar ist. Bei den Markierungen 26, 28 handelt es sich vorzugsweise um drei auf der Oberfläche der Halterung 12 angeordnete z. B. punkt- oder linienförmige Kennzeichnungen.

Die optische Achse 30 der Referenzierungskamera 24 fällt - wie die Zeichnung verdeutlicht - mit der Drehachse 20 des Drehtisches 18 zusammen. Der Drehtisch wird schrittweise, vorzugsweise im Winkel von 1°, gedreht, wodurch eine Koordinate (X-Koordinate) des zu messenden zahntechnischen Objekts 10 vorgegeben ist. Die verbleibenden (Y- und Z-) Koordinaten des jeweils zu erfassenden Messpunktes werden über zwei CMOS-Matrix-Farbkameras 32, 34 ermittelt, die einen auf das Positivmodell projizierten Lichtstrahl vermessen, der bevorzugterweise von einer Lasereinheit 36 stammt. Diese kann einen Diodenlaser mit Kollimatoroptik und Zylinderlinsenanordnung umfassen. Insoweit wird jedoch auf konstruktive Lösungen verwiesen, die von Anordnungen her bekannt sind, die für Lichtschnlitverfahren verwendet werden. Als Laserlicht wird vorzugsweise ein solches verwendet, dessen Strahlung in einem Wellenlängenbereich konzentriert ist, der charakteristisch zur Anregung der roten Pixel der CMOS-Matrix-Farbkamera 32, 34 ist. Bevorzugterweise sollte eine Strahlung benutzt werden, die im Bereich von 635 nm konzentriert ist.

Die optischen Achsen 38, 40 der Matrix-Farbkämeras 32, 34 können einen Winkel γ mit vorzugsweise γ ≈ 80° einschließen, wobei die jeweilige optische Achse 38, 40 zur Vertikalen, die in der Zeichnung mit der optischen Achse 30 der Referenzierungskamera 24 zusammenfällt, einen Winkel α₁ bzw. α₂ mit 30° ≤ α₁, α₂ ≤ 60° betragen sollte. Insbesondere sind die CMOS-Matrix-Kameras 32, 34 symmetrisch zur Achse 30 angeordnet.

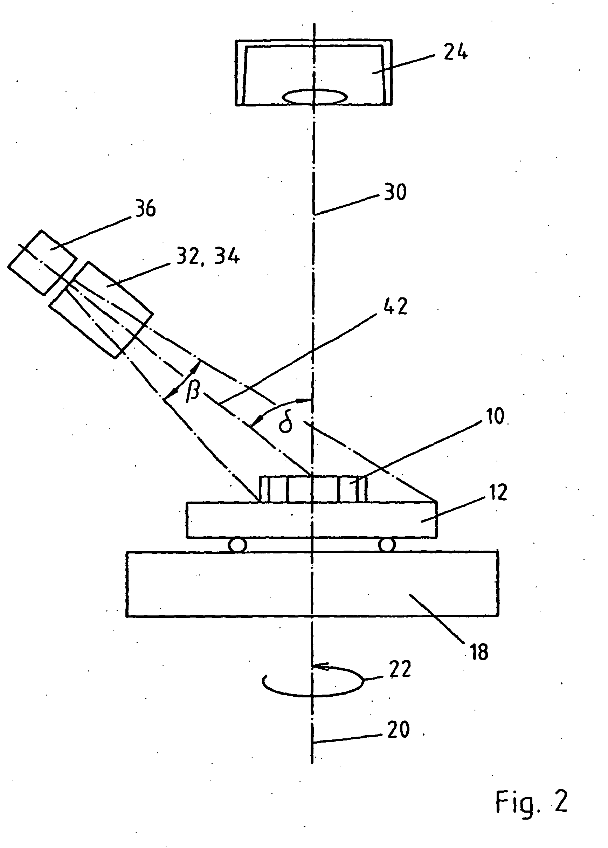

Wie sich aus der Fig. 2 ergibt, verläuft die Lasereinheit 36 in der Ebene, die von den Matrix-Farbkameras 32, 34 aufgespannt wird. Folglich beschreibt der Mittelstrahl 42 der Lasereinhcit 36 zur Vertikalen, die durch die optische Achse 30 der Referenzierungskamera 24 vorgegeben wird, einen Winkel δ, der α₁ bzw. α₂ entspricht. Ferner ist die Lasereinheit 36 derart zu den Kameras 38, 40 ausgerichtet, dass der aufgefächerte Strahl in einer Ebene verläuft, in der die Winkelhalbierende zwischen den optischen Achsen 38, 40 der Matrix-Farbkameras 32, 34 verläuft.

Der Lichtstrahl der Lasereinheit 36 ist vorzugsweise um den Winkel δ mit 10° ≤ β ≤ 30°, vorzugsweise δ ≈ 20° aufgefächert.

Bei der Messung wird bevorzugterweise der Messtisch 18 in Schritten von vorzugsweise jeweils 1° um die Achse 22 um insgesamt 360° gedreht, um in jeder Position mittels der Matrix-Kameras 32, 34 den Lichtstreifen zu messen (Messungen über einen vorgegebenen Gesamtwinkel wie 360° insgesamt 1 Scan), um sowohl die Y- als auch die Z-Koordinate des jeweiligen Messpunktes des zu messenden Abschnitts des Gipsmodells) 10 zu bestimmen. Dabei wird das Gipsmodell 10 zu der Drehachse 20 und damit zur optischen Achse 30 der Referenzierungskamcra 24 derart ausgerichtet, dass diese den Mittelpunkt des zu messenden Abschnitts des Gipsmodells durchsetzt.

Sofern die Referenzierung (Markierungen 26, 28) für die Messungen benötigt wird, muss diese klar erkennbar sein. Hierzu kann das Objektiv der Referenzierungskamera 24 von einem vorzugsweise aus Dioden bestehenden Leuchtring 44 konzentrisch umgeben sein, über den die Halterung 12 ausgeleuchtet wird.

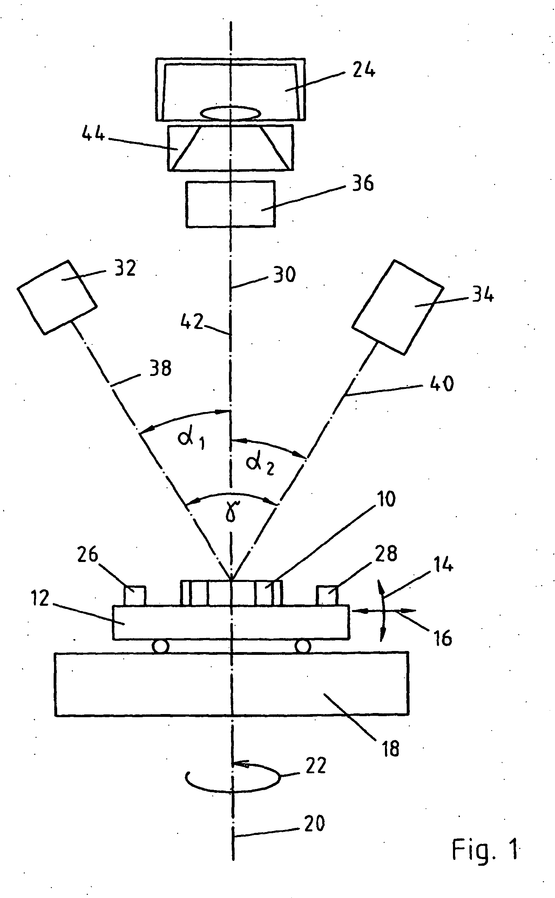

Um mit der entsprechenden Anordnung, die in ihrer rein prinzipiellen Ausgestaltung der Figur 1 zu entnehmen ist. das Positivmodell 10 bzw. den mit einem Zahnersatz zu versorgenden Bereich bzw. Abschnitt zu messen, ist folgende Vorgehensweise zu beschreiten.

So wird zunächst das zu vermessende Gipsmodell 10, das der Situation im Mund eines Patienten entspricht, auf der Halterung 12 - auch Modellhalter genannt - ausgerichtet und befestigt. Die Ausrichtung geschieht in der Weise, dass die Einschubrichtung des zu konstruierenden Zahnersatzes parallel zur Drehachse 20 des Drehtisches 18 und damit parallel zur optischen Achse 30 der Referenzierungskamera 24 verläuft. Dabei sollte die Drehachse 20 und damit die optische Achse 30 der Referenzierungskamera 24 den Mittelpunkt des zu vermessenden Bereichs bzw. Abschnitts des Gipsmodells bzw. Positivmodells 10 durchsetzen.

Nötigenfalls können Nachbarareale des zu vermessenden Bereichs freigelegt werden, um Abschattungen zu vermeiden.

Der Modellhalter 12 wird nun so lange verschoben, bis der Mittelpunkt der zu vermessenden Modellposition im Schnittpunkt des eingeblendeten Achsenkreuzes liegt.

Nach der mechanischen Verriegelung der Modellhalterung 12 auf dem Drehtisch 18 fällt der Mittelpunkt der zu vermessenden Zahn- oder Lückenposition mit der Drehachse 20 des Drehtisches 18 zusammen.

Zur Erleichterung der Ausrichtung wird das von der Referenzierungskamera 24 aufgenommene Bild zusammen mit einem eingeblendeten Achsenkreuz auf einem Bildschirm dargestellt.

Sodann wird der Scanvorgang durch einen Bediener gestartet. Hierzu wird der Drehtisch 18 zunächst in eine Ausgangsposition selbsttätig gedreht, gleichwenn jede Position des Dreh- bzw. Messtisches 18 dem Grunde nach als Ausgangsposition gewählt werden kann. Zum schrittweisen Drehen des Drehtisches 18 (jeweils vorzugsweise um 1°) wird die zu vermessende Zahn- oder Lückenposition unter der von der Lasereinrichtung 36 projizierten Licht- bzw. Laserlinie gedreht und es werden mit den beiden Matrix-Farbkameras 32, 34 Synchronaufnahmen der reflektierten Lichtlinie gewonnen.

Aus diesen Aufnahmen und dem jeweiligen Drehwinkel, der z.B. über einen Schrittmotor bestimmt wird, werden sodann nach einem Durchlauf (vorzugsweise 360°; 1 Scan oder Einzelscan) die Y- und Z-Koordinaten der Oberfläche der Zahn- oder Lückenposition entsprechend dem Lichtschnittverfahren bestimmt. Die fehlende X-Koordinate ergibt sich aus der jeweiligen Stellung des Messtisches 18.

Alternativ kann der Drehtisch 18 mit einer konstanten Umfangsgeschwindigkeit gedreht und das Gipsmodell 10 mit einer festen Bildfolgefrequenz aufgenommen werden.

Um einen z. B. mehrere Zahn- oder Lückenpositionen umfassenden Modellabschnitt vermessen zu können, sind in der Regel mehrere entsprechende Scanvorgänge (Einzelscanvorgänge) durchzuführen.

Um die gesamte Oberfläche eines größeren Modellabschnitts oder sogar des ganzen Modells in einem einheitlichen Koordinatensystem darstellen zu können, werden sodann die Einzelscans, d. h. die Punktwolken der einzelnen Messungen verknüpft. Hierzu sind die Referenzmarkierungen 26, 28, die auf dem Modellhalter 12 vorhanden sein können, von Bedeutung, da hierdurch eine geometrische Zuordnung der einzelnen Positionen des Gipsmodells 10 zur Drehachse 20 des Messtisches 18 ermöglicht wird; denn bei jedem Scan beschreiben die Referenzmarkierungen 26, 28, die auf dem Modellhalter 12 vorhanden sind, Kreisbahnen um die Drehachse 20, die von der Referenzierungskamera 24 aufgenommen werden. Veränderung der Position bzw. der Durchmesser der Kreise bei den jeweiligen Messungen sind ein Maß für die zwischen den Messungen vorgenommenen Verschiebungen. Somit ist es möglich, die Daten aller Einzelscans, also der in einem Durchlauf gewonnenen Werte, deren Koordinatensätze von der jeweiligen Ausrichtung des Modellhalters 12 abhängig sind, in ein gemeinsames Koordinatensystem umzurechnen.

Die Beaufschlagung der Matrix-Kameras mit einer Strahlung, in der dem Grunde nach nur eine der Pixelarten angeregt wird und sodann die Auswertung der Pixel einer anderen Art, wobei die Bestrahlungsstärke so hoch gewählt wird, dass eine Übersteuerung bzw. Überbelichtung erfolgt, führt zu einem großen nutzbaren Dynamikbereich für die Erkennung der Mitte und der Randbereiche der reflektierten Laserlinie, d. h. diese wird überaus präzise ermittelt.

Um eine hohe Auflösung zu erzielen, ist vorgesehen, dass von den Pixeln der CMOS-Matrix-Farbkameras 32, 34 nur die Grünanteile ausgewertet werden, sofern die Matrizen mit einer Strahlung beaufschlagt werden, deren Wellenlängenbereich für die Anregung der roten Pixel charakteristisch ist. Anstelle der grünen Pixel können auch die blauen Pixel ausgewertet werden.

Wenn man außerdem die Anordnung der Subpixel zueinander (z. B. Bayer-Pattern) berücksichtigt, d. h. bei der Auswertung der Rot-, Grün- bzw. Blaubilder den entsprechenden geometrischen Versatz der Subpixel ausgleicht, lässt sich die Genauigkeit der Koordinatenbestimmung noch steigern.

Um die Matrix-Kameras 32, 34 zu kalibrieren, erfolgt eine Ausrichtung auf einen Kalibrierkörper, der ein flächiger vorzugsweise eine Rechteckform aufweisender Körper ist, von dem jeweils eine der Seiten von einer der Matrix-Kameras 32, 34 erfasst wird. Dabei wird ein Kalibrierkörper einer Dicke benutzt, die kleiner als Schärfentiefe der jeweiligen Matrixkamera 32,34 ist.

Die Matrix-Kameras 32, 34, werden sodann derart ausgerichtet, dass die Bilder der jeweiligen Seite des Kalibrierkörpers identisch sind.

Durch die Schrägstellung der Matrizen, d. h. durch den von 90° abweichenden Scheimpflugwinkel der Matrizen zur Normalen der jeweiligen Seite erfolgt eine Verzerrung von auf den Seiten des Kalibrierkörpers vorhandenen Markierungen wie Kreisen. Diese Verzerrung wird durch Software korrigiert. Sodann ist jedem Pixel der Matrizen eine Koordinate zuordbar. Dabei wird ein Kalibrierkörper einer Dicke benutzt, die kleiner als Schärfentiefe der jeweiligen Matrixkamera 32, 34 ist.

Um die in den einzelnen Winkelstellungen des Drehtisches 18 aufgenommenen Bilder auf die Drehachse des Drehtisches 18 zu transformieren, werden des Weiteren von den Matrix-Kameras 32, 34 Bilder von einem Kalibrierstab oder -stift aufgenommen, der entlang der Drehachse und von dieser durchsetzt verläuft. Die entsprechenden Bilder des Stiftes bzw. Stabs werden zur Transformation der Messergebnisse, also der Bilder der auf dem Gipsmodell 10 abgebildeten Laserlinie auf die Drehtischachse 20 benutzt. Hierbei ist auch der Durchmesser des Kalibrierstabs zu berücksichtigen.

Mit einer geeigneten Auswerteeinheit werden sodann die Messergebnisse der CMOS-Matrixkameras 32, 34 unter Berücksichtigung der zuvor erläuterten Transformation sowie der Stellung des Drehtisches 18 bzw. der über die Referenzierungen 26, 28 erfassbaren Positionen des zu messenden zahntechnischen Objekts die digitalen Werte berechnet, auf deren Basis in gewohnter Weise im CAD-CAM-Verfahren der gewünschte Zahnersatz hergestellt wird. Insoweit wird auf Umsetzungsmöglichkeiten verwiesen, wie diese der EP-B-0913 130 oder der WO-A-99/47065 zu entnehmen sind.

## Patentansprüche

1. Verfahren zur berührungslosen dreidimensionalen Formerfassung eines zahntechnischen Objektes wie FositivmodeUs oder eines Abschnitt dieses, wobei zur Ermittlung der Raumkoordinaten zu messender Oberflächenpunkte des Objektes ein auf das Objekt projizierter Lichtstreifen mit zumindest zwei Matrix-Kameras zur Bestimmung von zwei Ortskoordinaten eines Koordinatensystems gemessen werden und durch Erfassen der Position des auf einem um eine Drehachse drehbaren Messtisches angeordneten Objekts dritte Raumkoordinate bestimmt wird,
**dadurch gekennzeichnet,**
**dass** die Matrix-Kamera eine Farb-Matrix-Kamera mit ersten, zweiten und dritten Pixeln ist, dass von der Matrix-Kamera Licht in einem im Wesentlichen für eine Art der Pixel charakteristischen Wellenlängenbereich aufgenommen und Werte zumindest einer der anderen Arten der Pixel zur Bestimmung der zwei ersten Ortskoordinaten ausgewertet werden.

2. Verfahren nach Anspruch 1,
**dadurch gekennzeichnet,**
**dass** die Matrix-Kamera mit einer Strahlung im für die roten Pixel als die ersten Pixel charakteristischen Wellenlängenbereich, vorzugsweise im Wellenlängenbereich von in etwa 635 nm beaufschlagt wird.

3. Verfahren nach Anspruch 1 oder 2,
**dadurch gekennzeichnet,**
**dass** die Matrix-Kamera mit einer Bestrahlungsstärke beaufschlagt wird, die zu einer Übersteuerung der ersten Art der Pixel führt.

4. Verfahren nach einem der vorhergehenden Ansprüche,
**dadurch gekennzeichnet,**
**dass** das Objekt mit einer Strahlung in einem für die ersten Pixel charakteristischen Wellenlängenbereich beaufschlagt wird.

5. Verfahren nach Anspruch 1 oder 2,
**dadurch gekennzeichnet,**
**dass** als die andere Art der Pixel die grünen Pixel ausgewertet werden.

6. Verfahren nach einem der vorhergehenden Anspruche,
**dadurch gekennzeichnet,**
**dass** als Kamera eine CMOS-Kamera verwendet wird.

7. Verfahren nach einem der vorhergehenden Ansprüche,
**dadurch gekennzeichnet,**
**dass** die Matrix-Kameras und/oder deren Matrizen (Chipflächen) symmetrisch zu einer Ebene ausgerichtet werden, in der die Drehachse des Messtischs liegt, und dass die Matrix-Kameras bzw. Matrizen derart zu einem flächigen in der Ebene angeordneten und mittig von der Ebene durchsetzten Kalibrierkörper ausgerichtet werden, dass die Bilder identisch sind.

8. Verfahren nach einem der vorhergehenden Ansprüche,
**dadurch gekennzeichnet,**
**dass** die Matrizen (Chipflächen) der Matrix-Kameras in Bezug auf einen flächigen eine Rechteckform aufweisenden Kalibrierkörper, von dem jeweils eine Seite von einer der Matrix-Kameras gemessen wird, derart ausgerichtet werden, dass das von der jeweiligen Seite aufgenommene Einzelbild einer jeden Kamera zu einem Gesamtbild zusammengesetzt wird, das ohne Überlappung der Einzelbilder eine Rechteckform aufweist.

9. Verfahren nach einem der vorhergehenden Ansprüche,
**dadurch gekennzeichnet,**
**dass** zum Transformieren der von den Matrix-Kameras aufgenommenen Bilder des Objekts in das Koordinantensystem (X-, Y-, Z-Koordinaten) ein Vergleich dieser mit Bildern eines Normkörpers erfolgt, der von der Drehachse durchsetzt wird.

10. Verfahren nach Anspruch 9,
**dadurch gekennzeichnet,**
**dass** als Normkörper ein Stift oder Stab mit beispielsweise einem kreisrunden oder mehreckigen wie quadratischen Querschnitt verwendet wird, dessen Längsachse mit der Drehachse des Messtisches übereinstimmt.

11. Verfahren nach einem der vorhergehenden Ansprüche,
**dadurch gekennzeichnet,**
**dass** oberhalb des Messtisches eine Referenzierungskamera angeordnet wird, deren optische Achse entlang Drehachse des Messtisches ausgerichtet wird und dass der Messtisch oder eine das Objekt aufnehmende und auf dem Messtisch angeordnete Halterung mit einer Referenzierung versehen wird, mittels der Positionen, in denen das Objekt auf dem Messtisch angeordnet wird, zueinander in Bezug gesetzt werden.

12. Verfahren nach einem der vorhergehenden Ansprüche,
**dadurch gekennzeichnet,**
**dass** die Matrix-Kameras derart zueinander ausgerichtet werden, dass sich deren optische Achsen unter einem Winkel γ mit 60° ≤ γ ≤ 90° schneiden.

13. Verfahren nach einem der Ansprüche 11 oder 12,
**dadurch gekennzeichnet,**
**dass** die die Referenzierung aufweisende und das zahntechnische Objekt haltende Halterung auf dem Messtisch befestigt wird und dass die dritte Koordinate aus der Drehposition des Messtisches bestimmt wird.

14. Anordnung zur berührungslosen dreidimensionalen Formerfassung eines zahntechnischen Objekts (10) wie Positivmodells oder Abschnitt dieses mit einem das zahntechnische Objekt aufnehmenden um eine Drehachse (20) drehbaren Messtisch (18), einer Lichterzeugungseinrichtung (36) wie Lasereinrichtung zum Abbilden einer Lichtlinie auf das zahntechnische Objekt, zwei auf die Lichtlinie ausgerichteten Matrix-Kameras (32, 34) sowie einer Signale der Matrix-Kameras zur Bestimmung von Koordinaten der Lichtlinie auswertenden Auswerteeinheit,
**dadurch gekennzeichnet,**
**dass** die Matrix-Kameras Farbkameras sind, wobei die Matrix-Kameras mit Licht in einem Wellenlängenbereich beaufschlagt sind, der charakteristisch für eine Art der Pixel ist, und dass die Ladungswerte einer von der ersten Art der Pixel verschiedenen zweiten Art von Pixeln zur Vermessung der Lichtlinie auswertbar sind.

15. Anordnung nach Anspruch 14,
**dadurch gekennzeichnet,**
**dass** oberhalb des Messtisches (18) eine Referenzierungskamera (24) zur Erfassung von zumindest einer Referenzierung (26, 28) angeordnet ist, die der Position des zahntechnischen Objekts (10) auf dem Messtisch zugeordnet ist.

16. Anordnung nach Anspruch 15,
**dadurch gekennzeichnet,**
**dass** das zahntechnische Objekt (10) auf einem auf dem Messtisch (18) anordbare Halterung (12) mit der von der Referenzierungskamera (24) erfassenden Referenzierung (26, 28) positioniert ist.

17. Anordnung nach Anspruch 16,
**dadurch gekennzeichnet,**
**dass** die Halterung (12) zu dem Messtisch (18) verstell- und/oder kippbar ausgebildet ist.

18. Anordnung nach Anspruch 14,
**dadurch gekennzeichnet,**
**dass** die Matrix-Kamera (32, 34) eine CMOS-Farb-Matrix-Kamera ist.

19. Anordnung nach Anspruch 14,
**dadurch gekennzeichnet,**
**dass** die optischen Achsen (38, 40) der zwei Matrix-Kameras (32, 34) sich unter einem Winkel γ mit 60° ≤γ≤ 90° schneiden.

20. Anordnung nach Anspruch 18,
**dadurch, gekennzeichnet,**
**dass** die optischen Achsen (38, 40) der Matrix-Kameras (32,34) zur Vertikalen einen Winkel α₁, α₂ mit 30°≤α₁,α₂≤60° einschliessen.

21. Anordnung nach 14,
**dadurch gekennzeichnet,**
**dass** Öffnungswinkel β der Lichterzeugungseinrichtung (36) im Bereich 10° ≤ β ≤ 30° liegt, insbesondere β ≃ 20° beträgt

22. Anordnung nach Anspruch 15,
**dadurch gekennzeichnet,**
**dass** die Referenzierungskamera (24) einen dessen Optik konzentrisch umgebenden auf den Messtisch (18) ausgerichteten Beleuchtungsring (44) aufweist.

23. Anordnung nach Anspruch 14,
**dadurch gekennzeichnet,**
**dass** die Matrizen der Matrix-Kameras (32,34) bezüglich ihrer Scheimpflugwinkel derart ausgerichtet sind, dass das jeweilige von jeweils einer Seite eines flächigen Kalibrierobjekts aufgenommene Bild gleichmäßig scharf abgebildet ist, wobei der Kalibrierkörper zu der Drehachse des Messtisches derart ausgerichtet ist, dass diese innerhalb des Kalibrierkörpers verläuft, und der Kalibrierkörper eine Dicke aufweist, die gleich oder kleiner als Schärfentiefe jeweiliger Matrix-Kamera ist.

## Claims

1. Method for a non-contact, three-dimensional determination of the shape of a dental technology object such as a positive model or a section of it, whereby, to determine the spatial coordinates of surface points of the object to be measured, a strip of light projected onto the object is measured by at least two matrix cameras to determine two coordinates of a coordinate system, and a third coordinate is determined by capturing the position of the object arranged on a measuring table, which can rotate around a rotational axis,
**characterized in**
**that** the matrix camera is a color matrix camera with first, second and third pixels, that light is detected by the matrix camera in a wave length range substantially characteristic for one type of the pixels, and values of at least one of the other types of the pixels are analyzed to determine the two first coordinates.

2. Method according to claim 1,
**characterized in**
**that** the matrix camera is exposed to an irradiation in the wave-length range characteristic for the red pixels as the first pixels, preferably in the wave-length range of approximately 635nm.

3. Method according to claim 1 or 2,
**characterized in**
**that** the matrix camera is exposed to a radiation intensity which leads to an overcharging of the first type of pixels.

4. Method according to one of the preceding claims,
**characterized in**
**that** the object is exposed to an irradiation in a wave-length range characteristic for the first type of pixels.

5. Method according to claim 1 or 2,
**characterized in**
**that** as the other type of pixels the green pixels are analyzed.

6. Method according to one of the preceding claims,
**characterized in**
**that** the camera used is a CMOS camera.

7. Method according to one of the preceding claims,
**characterized in**
**that** the matrix cameras and/or their matrices (chip surfaces) are oriented symmetrically relative to a plane in which the rotational axis of the measuring table lies, and that the matrix cameras or matrices are oriented in such a way relative to a flat calibrating body that the images are identical, the calibrating body being arranged in the plane and being centrally traversed by it.

8. Method according to one of the preceding claims,
**characterized in**
**that** the matrices (chip surfaces) of the matrix cameras are so oriented relative to a flat, rectangular calibrating body, of which a respective side is measured by one of the matrix cameras, that the individual image of each camera taken from the respective side is combined into a complete image which has a rectangular form without overlapping of the individual images.

9. Method according to one of the preceding claims,
**characterized in**
**that** to transform the images of the object taken by the matrix cameras into the coordinate system (X-, Y-, Z-coordinates) a comparison of these is performed with the images of a standard body which is traversed by the rotational axis.

10. Method according to claim 9,
**characterized in**
**that** as standard body a pin or rod with, for example, a circular or polygonal, such as square-shaped, cross-section is used whose longitudinal axis corresponds to the rotational axis of the measuring table.

11. Method according to one of the preceding claims,
**characterized in**
**that** above the measuring table a referencing camera is arranged whose optical axis is oriented along the rotational axis of the measuring table and that the measuring table or a holding means, receiving the object and arranged on the measuring table, is marked with a referencing means by which positions in which the object is arranged on the measuring table are determined relative to each other.

12. Method according to one of the preceding claims,
**characterized in**
**that** the matrix cameras are oriented in reference to each other in such a way that their optical axis intersect each other at an angle γ at 60° ≤ γ ≤ 90°.

13. Method according to one of claims 11 or 12,
**characterized in**
**that** the holding means which is provided with the referencing means and holds the dental technology object is attached on the measuring table and that the third coordinate is determined from the rotational position of the measuring table.

14. Arrangement for the non-contact, three-dimensional determination of shape of a dental technology object (10) such as a positive model or a section thereof with a measuring table (18) receiving the dental technology object and rotatable about an axis of rotation (20), a light-generating apparatus (36) such as a laser apparatus for imaging a line of light onto the dental technology object, two matrix cameras (32, 34) oriented towards the line of light, and an analysis unit analyzing signals from the matrix cameras to determine coordinates of the line of light,
**characterized in**
**that** the matrix cameras are color cameras, whereby the matrix cameras are exposed to light in a wave-length range which is characteristic for one type of the pixels, and that the loading values of a second type of the pixels, which are different from the first type of the pixels, can be analyzed to measure the line of light.

15. Arrangement according to claim 14,
**characterized in**
**that** above the measuring table (18) a referencing camera (24) is arranged to determine at least one referencing means (26, 28) which is associated with the position of the dental technology object (10) on the measuring table.

16. Arrangement according to claim 15,
**characterized in**
**that** the dental technology object (10) is positioned on a holding means (12), which can be arranged on the measuring table (18), with the referencing means (26, 28) which is to be captured by the referencing camera (24).

17. Arrangement according to claim 16,
**characterized in**
**that** the holding means (12) is made displaceable and/or tiltable relative to the measuring table (18).

18. Arrangement according to claim 14,
**characterized in**
**that** the matrix camera (32, 34) is a CMOS color matrix camera.

19. Arrangement according to claim 14,
**characterized in**
**that** optical axes (38, 40) of the two matrix cameras (32, 34) intersect at an angle γ, where 60° ≤ γ ≤ 90°.

20. Arrangement according to claim 18,
**characterized in**
**that** the optical axes (38, 40) of the matrix cameras (32, 34) subtends with the vertical an angle α₁, α₂ where 30° ≤ α₁, α₂ ≤ 60°.

21. Arrangement according to claim 14,
**characterized in**
**that** the aperture angle β of the light generating apparatus (36) is in the range 10° ≤ β ≤ 30°, especially β ≈ 20°.

22. Arrangement according to claim 15,
**characterized in**
**that** the reference camera (24) comprises a luminous ring (44) directed towards the measuring table (18) and concentrically surrounding its optical system.

23. Arrangement according to claim 14,
**characterized in**
**that** the matrices of the matrix cameras (32, 34) are oriented in such a manner relative to their Scheimpflug angle that the respective image captured from each side of a flat calibrating object is homogenously sharply imaged, whereby the calibrating body is oriented in such a manner relative to the rotational axis of the measuring table that it extends within the calibrating body, and the calibrating body has a thickness which is equal to or smaller than the depth of focus of the respective matrix camera.

## Revendications

1. Procédé de saisie tridimensionnelle sans contact d'une forme d'un objet de technique dentaire tel qu'un modèle positif ou une partie de celui-ci, selon lequel
pour déterminer les coordonnées dans l'espace des points de surface à mesurer de l'objet, on mesure une bande de lumière projetée sur l'objet avec au moins deux caméras matricielles pour déterminer deux coordonnées de lieu d'un système de coordonnées et par saisie de la position de l'objet installé sur le plateau de mesures rotatif autour d'un axe, on détermine une troisième coordonnée dans l'espace,
**caractérisé en ce que**
la caméra matricielle est une caméra couleurs avec des premiers, des seconds et des troisièmes pixels,
la caméra matricielle prend la lumière dans une plage de longueurs d'ondes caractéristique principalement pour un type de pixels et exploite des valeurs d'au moins un autre type de pixels pour déterminer les deux premières coordonnées de lieu.

2. Procédé de saisie tridimensionnelle sans contact selon la revendication 1,
**caractérisé en ce que**
la caméra matricielle travaille avec un rayonnement dans la plage de longueurs d'ondes caractéristique des pixels rouges constituant les premiers pixels, de préférence une plage de longueur d'ondes d'environ 635 nm.

3. Procédé de saisie tridimensionnelle sans contact selon la revendication 1 ou 2,
**caractérisé en ce que**
la caméra matricielle reçoit une intensité d'éclairage qui conduit à une sur-modulation du premier type des pixels.

4. Procédé de saisie tridimensionnelle sans contact selon l'une des revendications précédentes,
**caractérisé en ce qu'**
on applique à l'objet à un rayonnement dans une plage de longueurs d'ondes caractéristique pour les premiers pixels.

5. Procédé de saisie tridimensionnelle sans contact selon la revendication 1 ou 2,
**caractérisé en ce que**
comme pixels de l'autre type, on exploite les pixels verts.

6. Procédé de saisie tridimensionnelle sans contact selon l'une des revendications précédentes,
**caractérisé en ce que**
la caméra utilisée est une caméra CMOS.

7. Procédé de saisie tridimensionnelle sans contact selon l'une des revendications précédentes,
**caractérisé en ce que**
les caméras matricielles et/ou les matrices de celle-ci (surfaces de puce) sont alignées symétriquement par rapport à un plan dans lequel se situe l'axe de rotation du plateau tournant et les caméras matricielles ou les matrices sont alignées par rapport à un organe de calibrage en forme de surface dans le plan, et qui est traversé en son milieu par le plan, de façon que les images soient identiques.

8. Procédé de saisie tridimensionnelle sans contact selon l'une des revendications précédentes,
**caractérisé en ce que**
les matrices (surfaces de puce) des caméras matricielles sont alignées par rapport à un organe de calibrage en forme de surface rectangulaire, et dont chaque fois un côté est mesuré par l'une des caméras matricielles, de façon que l'image unique prise du côté respectif par chacune des caméras soit composée pour redonner une image d'ensemble de forme rectangulaire sans chevauchement des images séparées.

9. Procédé de saisie tridimensionnelle sans contact selon l'une des revendications précédentes,
**caractérisé en ce que**
pour transformer les images de l'objet prises par les caméras matricielles dans le système de coordonnées (coordonnées X, Y, Z), on effectue une comparaison de ces coordonnées avec les images d'un corps normalisé traversé par l'axe de rotation.

10. Procédé de saisie tridimensionnelle sans contact selon la revendication 9,
**caractérisé en ce que**
le corps normalisé est une tige ou une barre ayant par exemple une section circulaire ou polygonale telle qu'une section carrée et dont l'axe longitudinal correspond à l'axe du plateau de mesure.

11. Procédé de saisie tridimensionnelle sans contact selon l'une des revendications précédentes,
**caractérisé en ce qu'**
au-dessus du plateau de mesure, l'axe optique d'une caméra de référence est aligné sur l'axe de rotation du plateau de mesure et
le plateau de mesure, ou un support recevant l'objet et installé sur le plateau de mesure, comporte une référence à l'aide de laquelle on associe les positions selon lesquelles l'objet est disposé sur le plateau de mesure, positions qui sont mises en relation.

12. Procédé de saisie tridimensionnelle sans contact selon l'une des revendications précédentes,
**caractérisé en ce que**
les caméras matricielles sont alignées l'une par rapport à l'autre pour que leurs axes optiques fassent un angle 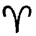 tel que 60° ≤ 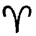 ≤ à 90°.

13. Procédé de saisie tridimensionnelle sans contact selon la revendication 11 ou 12,
**caractérisé en ce que**
le support qui présente la référence et tient l'objet de technique dentaire est fixé sur le plateau de mesure et on détermine la troisième coordonnée à partir de la position de rotation du plateau de mesure.

14. Dispositif pour la saisie tridimensionnelle sans contact de la forme d'un objet de technique dentaire (10) tel qu'un modèle positif ou une partie de celui-ci à l'aide d'un plateau de mesure (18) tournant autour d'un axe de rotation (20) et recevant l'objet de technique dentaire, et une installation générant de la lumière (36) telle qu'une installation laser pour former l'image d'une ligne lumineuse sur l'objet de technique dentaire, deux caméras matricielles (32, 34) alignées sur la ligne de lumière ainsi qu'une unité d'exploitation des signaux des caméras matricielles déterminant les coordonnées de la ligne lumineuse,
**caractérisé en ce que**
les caméras matricielles sont des caméras couleurs,
les caméras matricielles reçoivent la lumière dans une plage de longueur d'ondes caractéristique pour un type de pixels, et
les valeurs de charge du premier type de pixels sont différentes de celles du second type de pixels pour être exploitées pour mesurer la ligne lumineuse.

15. Dispositif pour la saisie tridimensionnelle sans contact selon la revendication 14,
**caractérisé par**
une caméra de référence (24) installée au-dessus du plateau de mesure (18) pour saisir au moins une référence (26, 28) associée à la position de l'objet de technique dentaire (10) installé sur le plateau.

16. Dispositif pour la saisie tridimensionnelle sans contact selon la revendication 15,
**caractérisé en ce que**
l'objet de technique dentaire (10) est placé dans un support (12) installé sur le plateau de mesure (18) avec une référence (26, 28) destinée à être saisie par la caméra de référence (24).

17. Dispositif pour la saisie tridimensionnelle sans contact selon la revendication 16,
**caractérisé en ce que**
le support (12) peut être réglé et/ou basculé par rapport au plateau de mesure (18).

18. Dispositif pour la saisie tridimensionnelle sans contact selon la revendication 14,
**caractérisé en ce que**
la caméra matricielle (32, 34) est une caméra matricielle couleurs CMOS.

19. Dispositif pour la saisie tridimensionnelle sans contact selon la revendication 14,
**caractérisé en ce que**
les axes optiques (38, 40) des deux caméras matricielles (32, 34) se coupent suivant un angle 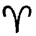 tel que 60° ≤ 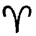 ≤ 90°.

20. Dispositif pour la saisie tridimensionnelle sans contact selon la revendication 18,
**caractérisé en ce que**
les axes optiques (38, 40) des caméras matricielles (32, 34) font un angle α1, α2 par rapport à la direction verticale de façon à avoir la relation 30° ≤ α1, α2 ≤ 60°.

21. Dispositif pour la saisie tridimensionnelle sans contact selon la revendication 14,
**caractérisé en ce que**
l'angle d'ouverture β de l'installation générant la lumière (36) se situe dans une plage de 10° ≤ β ≤ 30° notamment 30° β ≅ 20°.

22. Dispositif pour la saisie tridimensionnelle sans contact selon la revendication 15,
**caractérisé en ce que**
la caméra de référence (24) comporte un anneau d'éclairage (44) optiquement entouré de manière concentrique dirigé vers le plateau de mesure (18).

23. Dispositif pour la saisie tridimensionnelle sans contact selon la revendication 14,
**caractérisé en ce que**
les matrices des caméras (32, 34) sont alignées par rapport à leur angle de Cheimpflug de façon que chaque image prise chaque fois d'un côté de l'objet de calibrage en forme de surface soit de même netteté,
le corps de calibrage étant aligné par rapport à l'axe de rotation du plateau de mesure pour que celui-ci passe par le corps de calibrage et le corps de calibrage a une épaisseur égale ou inférieure à la profondeur de champ de la caméra matricielle respective.
